(19) Europäisches Patentamt
European Patent Office
Office européen des brevets

(11) **EP 4 514 754 B1**

(12) **EUROPÄISCHE PATENTSCHRIFT**

(45) Veröffentlichungstag und Bekanntmachung des Hinweises auf die Patenterteilung:
**15.07.2026 Patentblatt 2026/29**

(21) Anmeldenummer: **23723479.4**

(22) Anmeldetag: **27.04.2023**

(51) Internationale Patentklassifikation (IPC):
*C02F 1/04* (2023.01)        *C02F 5/00* (2023.01)
*C02F 11/14* (2019.01)        *F28F 27/00* (2006.01)
*B01D 1/00* (2006.01)

(52) Gemeinsame Patentklassifikation (CPC):
**B01D 1/0082; C02F 1/008; F28F 27/003;**
C02F 2103/023; C02F 2209/02; C02F 2209/05;
C02F 2209/055; C02F 2209/42; C02F 2303/04;
C02F 2303/20; C02F 2303/22; F28F 2025/005

(86) Internationale Anmeldenummer:
**PCT/EP2023/061143**

(87) Internationale Veröffentlichungsnummer:
**WO 2023/209108 (02.11.2023 Gazette 2023/44)**

(54) **VERFAHREN ZUM BETREIBEN EINER VERDAMPFUNGSKÜHLANORDNUNG UND VERDAMPFUNGSKÜHLANORDNUNG**

METHOD OF OPERATING AN EVAPORATIVE COOLING ARRANGEMENT AND EVAPORATIVE COOLING ARRANGEMENT

PROCÉDÉ POUR FAIRE FONCTIONNER UN SYSTÈME DE REFROIDISSEMENT PAR ÉVAPORATION ET SYSTÈME DE REFROIDISSEMENT PAR ÉVAPORATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **27.04.2022 DE 102022110217**

(43) Veröffentlichungstag der Anmeldung:
**05.03.2025 Patentblatt 2025/10**

(73) Patentinhaber: **Pannenborg, Jens Uwe Hinderks 53797 Lohmar (DE)**

(72) Erfinder: **Pannenborg, Jens Uwe Hinderks 53797 Lohmar (DE)**

(74) Vertreter: **KBN IP Patentanwälte Partnerschaft mbB
Siegfried-Leopold-Straße 27
53225 Bonn (DE)**

(56) Entgegenhaltungen:
**EP-A1- 0 047 483        EP-A1- 2 175 224
DE-A1- 10 122 230        DE-A1- 2 922 735
JP-A- H0 252 085        US-A- 5 013 488**

# EP 4 514 754 B1

**Beschreibung**

Die Erfindung betrifft ein Verfahren zum Betreiben einer Verdampfungskühlanordnung, bei welchem Kühlwasser in einem Kreislauf geführt wird, wobei der Kreislauf ein Reservoir des Kühlwassers und einen Verdampfungskühler umfasst, in welchem eine Teilmenge des aus dem Kreislauf zugeführten Kühlwassers unter Abkühlung der verbleibenden Restmenge des zugeführten Kühlwassers verdampft und die verbleibende Restmenge in das Reservoir zurückgeleitet wird und wobei die verdampfte Teilmenge des Kühlwassers mit einem ersten in den Kreislauf eingeleiteten Teilstrom eines Nachsatzwassers ersetzt wird und in zeitlichen Abständen eine vorbestimmte Menge an Kühlwasser als Absalzwasser aus dem Kreislauf entfernt und durch eine gleich große Menge eines zweiten Teilstromes an Nachsatzwasser ersetzt wird. Die Erfindung betrifft ferner auch eine entsprechende Verdampfungskühlanordnung.

Technisch benutztes Wasser transportiert zumeist Heizwärme zum Ort der Benutzung oder überschüssige Wärme zwecks Kühlung vom Ort der Nutzung weg. Da Wasser die Fähigkeit aufweist, fast alle Stoffe zu lösen oder in sich aufzunehmen und zugleich universelle Grundlage allen Lebens ist, müssen, sofern es als Lebensmittel oder Werkzeug dient, alle seine besonderen Eigenschaften den Regeln der Physik und Chemie gerecht mit Sorgfalt bedient werden. Das gilt insbesondere für Verdampfungskühleranordnungen, die aus dem Kühlwasser Dampf erzeugen und Inhalte des Kühlwassers als Dampf oder Aerosol weitflächig in der Biosphäre verteilen.

Der Wärmetransport mittels Verdampfung von Wasser aus einem offenen System ist eine effiziente und seit langem bekannte Form der Rückkühlung. Sie bewirkt allerdings, dass die Konzentration der im Kühlwasser enthaltenen und der Verdampfung nicht folgenden Stoffe mit der Zeit ansteigt.

Durch die Verdampfung zumindest eines Teils des Kühlwassers wird zwar über die entstehende Verdampfungskälte eine gewünschte Abkühlung der verbleibenden Menge an Kühlwasser erzeugt, jedoch steigt durch die Verdampfung die Konzentration der im Kühlwasser enthaltenen Stoffe, wie zum Beispiel Calciumhydrogencarbonat, -sulfate, -silikate etc. Damit diese zurückbleibenden Stoffe ihre spezifischen Löslichkeitsgrenzen im Kühlwasser nicht überschreiten, muss nicht nur der aus der Teilverdampfung herrührende Wasserverlust durch Zugabe sogenannten Nachsatzwassers ausgeglichen werden, sondern es muss immer auch in gewissen zeitlichen Abständen ein Teil des im Kreislauf verbleibenden und nicht verdampften Kühlwassers aus dem Reservoir abgelassen und ebenfalls durch Zugabe von frischem Nachsatzwasser ersetzt werden, und zwar derart, dass die Sättigungsgrenze der im Kühlwasser gelösten Stoffe möglichst nie überschritten wird.

Der Effekt der bei der teilweisen Verdampfung des Kühlwasser eintretenden Konzentration der gelösten Stoffe wird häufig auch Eindickung genannt.

Die im Stand der Technik meist verwendete Art der Steuerung des chemischen Gleichgewichts des Kühlwassers und der Überwachung der Sättigungsgrenze erfolgt über elektrische Meßsonden, die die elektrische Leitfähigkeit des Kühlwassers ermitteln, welche mit der zunehmenden Konzentration der Stoffe ansteigt. Ein Schaltventil öffnet bei Erreichen einer voreingestellten maximalen Leitfähigkeit und lässt Kühlwasser aus dem Kreislauf als sogenanntes Absalzwasser in den Abwasserkanal oder die Umgebung abfließen, bis eine voreingestellte minimale Leitfähigkeit erreicht ist. Sodann wird die Menge an abgeführtem Absalzwasser im Kreislauf durch frisches Nachsatzwasser aufgefüllt.

Diese Steuerung des chemischen Gleichgewichts über die elektrische Leitfähigkeit erweist sich in der Praxis als problematisch, da der Leitfähigkeitswert nur einen Summenwert der Leitfähigkeiten aller gelösten Stoffe und Gase im Kühlwasser darstellt und keine individuelle Massenangabe für steinbildende Salze, wie zum Beispiel Calciumhydrogencarbonat, -Sulfate, - Silikate oder auch saure Gase wie $CO_2$, $SO_2$ etc. ausdrückt. Der Leitfähigkeitswert ist vielmehr die Summe vieler Einzelgrößen, an deren Zustandekommen die Summe der Härtebildner im Kühlwasser nur den geringsten Anteil hat. Diese Härtebildner sind jedoch beispielsweise für die Verkalkung einer Verdampfungskühlanordnung verantwortlich und müssen genauestens beobachtet werden. Wird beispielsweise die Sättigungsgrenze für Kalk im Kühlwasser überschritten, fällt Kalk aus und bildet unerwünschte, die Stabilität und Leistung der Anlage beeinträchtigende Ablagerungen, die durch Zugabe von frischem Nachsatzwasser nicht wieder aufgelöst werden können.

Die im Kühlwasser gelösten Salze haben also, jedes für sich, eine spezifische Löslichkeit, jenseits derer sie als Feststoffe ausfallen. Die Grenzlinie, ab der der Ausfall von Feststoffen stattfindet, wird auch Eindickungsgrenzlinie genannt. Um den Feststoffausfall zu verhindern, muss die tatsächliche Sättigungslinie des Kühlwassers über die Laufzeit der Verdampfungskühlanordnung als eine möglichst gerade horizontale Linie nahe unterhalb der Eindickungsgrenzlinie verlaufen. Ein Überschreiten der Eindickungsgrenzlinie bedeutet Feststoffausfall und demgemäß die Bildung von Verkrustungen, Schlamm und Biofouling, wohingegen ein Unterschreiten Wasser- und Chemikalienverlust mit letztendlich gleichen Konsequenzen nach sich zieht. Diese Regelung gestaltet sich in Abhängigkeit von der elektrischen Leitfähigkeit als nahezu unmöglich und fehlerbehaftet, da die elektrische Leitfähigkeit überdies auch von vielen instabilen und sich ständig ändernden Größen abhängig ist, wie zum Beispiel der Temperatur, dem Anteil saurer Gase, dem Elektrodenzustand, Fouling und Scaling etc. Es ist von daher bislang bei der von der elektrischen Leitfähigkeit abhängigen Steuerung nur gelungen, die Sättigungslinie als ineffiziente Sägezahnkurve einzuregeln, die zwischen dem Maximum und Minimum des voreingestellten Leitfähigkeitswertes pendelt. Die Folge ist erhöhter Verbrauch an Wasser und Chemikalien sowie eine allgemein erhöhte Verschmutzungsrate, die unter anderem das Bio-Fouling erheblich begünstigen kann. Eine anderes Beispiel wird offenbart in DE10122230A1.

Aufgabe der vorliegenden Erfindung ist es, die Nachteile des Standes der Technik zu überwinden und ein Verfahren zum Betreiben einer Verdampfungskühlanordnung sowie eine Verdampfungskühlanordnung vorzuschlagen, die weitgehend unabhängig von externen Faktoren einen zuverlässigen Dauerbetrieb ohne Gefahr des Über- oder Unterschreitens der Eindickungsgrenzlinie gewährleistet.

Zur Lösung der gestellten Aufgabe wird erfindungsgemäß die Ausgestaltung eines Verfahrens gemäß den Merkmalen des Patentanspruches 1 vorgeschlagen.

Eine Verdampfungskühlanordnung zur Lösung der gestellten Aufgabe ist Gegenstand des Patentanspruchs 7.

Vorteilhafte Ausgestaltungen und Weiterbildungen der Erfindung sind Gegenstand der abhängigen Ansprüche.

Der erfindungsgemäße Vorschlag sieht vor, dass ein mit dem Kreislauf verbindbarer Meßbehälter vorgesehen wird und ein Zyklus der nachstehenden Schritte ausgeführt wird, indem

- in einem ersten Schritt ein Teilvolumen des Meßbehälters mit der vorbestimmten Menge an Absalzwasser aus dem Kreislauf befüllt und das im Meßbehälter befindliche Absalzwasser anschließend abgeführt wird,
- in einem nachfolgenden Schritt der Meßbehälter chargenweise mit Nachsatzwasser eines vorgegebenen Mineraliengehalts vollständig befüllt wird,
- in einem anschließenden Schritt das im Meßbehälter vorhandene Nachsatzwasser in den Kreislauf eingeleitet wird, bis der Meßbehälter vollständig entleert ist und anschließend der Zyklus bis zu einem Abschaltereignis beliebig oft wiederholt wird.

Erfindungsgemäß wird somit auf die Messung der elektrischen Leitfähigkeit als Führungsgröße für die Absalzungsregelung verzichtet und stattdessen über ein per Analyse exakt hinsichtlich seines Mineraliengehalts definierbares Nachsatzwasser sichergestellt, dass das nach der Verdampfung als Restmenge des zugeführten Kühlwassers im Kühlturm verbleibende Kühlwasser durch exakt den Anforderungen entsprechendes Nachsatzwasser aufgefüllt wird und sich damit das Kühlwasser im Kreislauf in einem dauerhaft stabilen thermodynamischen Gleichgewicht befindet und die das Gleichgewicht störenden Stoffe sicher mit dem Absalzwasser ausgeschieden werden.

Dafür wird erfindungsgemäß das Nachsatzwasser chargenweise im Meßbehälter bereitgestellt.

Dem erfindungsgemäßen Verfahren und der Vorrichtung liegt die Erkenntnis zugrunde, dass das einer Verdampfungskühlanordnung zugefügte Nachsatzwasser stets die Summe der für den Ersatz der für die Verdampfung und die Absalzung bestimmten Mengenanteile umfasst. Der für die Verdampfung bestimmte Mengenanteil ersetzt die Teilmenge des aus dem Kreislauf im Verdampfungskühler verdampften Kühlwassers und der für die Absalzung bestimmte Mengenanteil ersetzt die in zeitlichen Abständen aus dem Kühlwasser als Absalzwasser entfernte Menge an Kühlwasser.

Für die Einhaltung eines stabilen Systems ist es somit erforderlich, das Volumen des im Kreislauf geführten Kühlwassers konstant zu halten, wobei zwecks Einhaltung des thermodynamischen Gleichgewichts zwei Proportionen eingehalten werden müssen:

Zum einen muss das Nachsatzwasser einen vorgegebenen Mineraliengehalt aufweisen, damit das im Kreislauf geführte und aus dem Nachsatzwasser gespeiste Kühlwasser einen gewünschten Mineraliengehalt aufweist, der sich aus dem Mineraliengehalt des nicht im Verdampfungskühler verdampften Kühlwassers und dem Mineraliengehalt des für den verdampften Anteil zugesetzten Nachsatzwassers durch Mischung im Kreislauf ergibt.

Dieser vorgegebene Mineraliengehalt des Nachsatzwassers wird erfindungsgemäß im Mischbehälter sichergestellt.

Wenn der Verdampfungskühlanordnung eine Wasserquelle zur Verfügung steht, die unmittelbar als Nachsatzwasser geeignet ist, beispielsweise ein hinsichtlich seines Mineraliengehalts den Anforderungen an das Nachsatzwasser entsprechendes Binnenseewasser oder größere Mengen an in einem Dampfprozess anfallendem Kondensat, kann dieses Wasser unmittelbar als Nachsatzwasser zur chargenweisen vollständigen Befüllung des Meßbehälters Verwendung finden.

In vielen Fällen wird jedoch eine solche geeignete Wasserquelle nicht oder nicht ständig zur Verfügung stehen. In diesen Fällen sieht die Erfindung in einer möglichen Ausgestaltung vor, dass bei der chargenweisen Befüllung des Meßbehälters dieser mit mindestens zwei unterschiedlichen Wasserfraktionen aufgefüllt wird, die nach Maßgabe des vorgegebenen Mineraliengehalts in entsprechenden Mischungsanteilen in den Meßbehälter eingefüllt und zu einer das Volumen des Meßbehälters vollständig auffüllenden Charge des Nachsatzwassers gemischt werden. Das Nachsatzwasser wird in diesem Fall aus unterschiedlichen Wasserfraktionen, insbesondere Wasserfraktionen unterschiedlichen Härtegrades, bedarfsgerecht chargenweise im Meßbehälter zubereitet, und zwar durch eine exakte Aufteilung z.B. in Rohwasser, üblicherweise Trinkwasser, und Weichwasser, üblicherweise enthärtetes Trinkwasser. Die sich ergebenden Teilmengen werden nach Maßgabe des gewünschten vorgegebenen Mineraliengehalts des Nachsatzwassers im Meßbehälter zusammengeführt und ergeben das für die Teilverdampfung im Kreislauf vorgesehene Nachsatzwasser.

Anstelle von voll enthärtetem Weichwasser können auch unterschiedlich harte Trinkwässer als Wasserfraktionen gemischt werden, dies richtet sich nach den jeweils spezifisch vorherrschenden Gegebenheiten.

Auf diese Weise wird erfindungsgemäß durch chargenweise Mischung der Mengenverhältnisse der mindestens einen Wasserfraktion eines z.B. Härtebildner enthaltenden Rohwassers und einer Fraktion eines einen anderen Härtegrad aufweisenden Rohwassers und/oder enthärteten Weichwassers im Meßbehälter der vorgegebene Mineraliengehalt des Nachsatzwassers und dessen nachfolgende Einspeisung in den Kreislauf sichergestellt.

Der Mineraliengehalt kann beispielsweise anhand von Analysewerten der vorhandenen Wasserqualitäten und aus den von außen einwirkenden chemischen und physikalischen Faktoren, wie zum Beispiel Luftzustand durch Verschmutzung, Temperaturschwankungen zwischen Wasser und Luft, Leistungsvermögen von Stabilisierungschemikalien usw. im Hinblick auf die maximal möglichen Salzgehalte im Nachsatzwasser und Kreislaufwasser ermittelt und manuell oder automatisch eingeregelt werden.

Zum anderen muss das Mengenverhältnis des dem Kreislauf zugeführten Nachsatzwassers zum abgeführten Absalzwasser in ein gewünschtes vorbestimmtes günstiges Verhältnis gesetzt werden, wobei der Quotient aus Menge des Nachsatzwassers zu Menge des Absalzwassers die sogenannte Eindickungszahl ergibt. Die Eindickungszahl entsteht durch die bei der Verdampfung eines Teils des Kreislaufwassers entstehende Stoffanreicherung. Sie soll die Eindickungsgrenzlinie wegen der Gefahr des Scalings nie überschreiten.

Erfindungsgemäß wird nun das gesamte Volumen des Meßbehälters, welches in weiten Grenzen beliebig sein kann, als 100 %-Gesamtvolumen angenommen. Die Größe des Meßbehälters wird nach dem effektiven Wasserbedarf pro Charge ausgelegt und stellt insoweit immer 100 % des Bedarfs dar. Alle während des erfindungsgemäßen Verfahrens relevanten Wassermengen, nämlich die mindestens eine Fraktion eines Härtebildner enthaltenden Rohwassers, die Fraktion eines enthärtetem Weichwassers, die sich durch Mischung dieser Fraktionen ergebende Menge an Nachsatzwasser pro Charge sowie die aus dem Kreislauf entfernte Menge an Absalzwasser stellen jeweils prozentuale Anteile des mit 100 % gleichgesetzten Gesamtvolumens des Meßbehälters dar. Durch Berechnung und nachfolgende Einstellung entsprechender prozentualer Anteile für das über den Meßbehälter zu mischende Nachsatzwasser und das über den Meßbehälter zu entfernende Absalzwasser können somit die Sättigungsgrenzen exakt eingestellt werden, die sich aus den mit der Eindickungszahl multiplizierten Mineralien-, insbesondere Salzkonzentrationen ergeben.

Beispielsweise kann eine gewünschte Resthärte des Nachsatzwassers durch Auswertung von geeigneten Indizes aus einer Wasseranalyse ermittelt werden, um festzulegen, mit welchen prozentualen Mengenverhältnissen Weichwasser und Rohwasser gemischt werden sollen und um welchen Faktor, d.h. mit welcher Eindickungszahl das Kühlwasser im Kreislauf durch Verdampfung aufkonzentriert werden kann, ohne das chemisch-physikalische Gleichgewicht zu stören. Auf diese Weise kann festgelegt werden, welcher prozentuale Anteil als Absalzwasser von 100% Nachsatzwasser abgeführt werden soll. Durch Beprobung während des Betriebs können die Mengenverhältnisse überprüft und ggf. fein nachjustiert werden.

Nach einem Vorschlag der Erfindung wird das Einleiten des Nachsatzwassers in den Kreislauf in Abhängigkeit vom Füllstand des Kühlwassers im Reservoir gesteuert, wozu im Reservoir beispielsweise geeignete Füllstandssensoren vorgesehen sein können.

Nach einem weiteren Vorschlag der Erfindung wird der Mineraliengehalt des dem Verdampfungskühler zugeführten Kühlwassers gemessen und mit einem vorgegebenen Sollwert verglichen. Bei Abweichung des gemessenen Mineraliengehalts des Kühlwassers vom Sollwert kann der vorgegebene Mineraliengehalt des Nachsatzwassers zum Beispiel durch Änderung der Mischungsverhältnisse von Rohwasser und Weichwasser entsprechend verändert werden und/oder eine Variation der vorbestimmten Menge an Absalzwasser vorgenommen werden, wodurch ebenfalls eine Änderung des Mineraliengehalts des Kühlwassers vollzogen werden kann.

Nach einem weiteren Vorschlag der Erfindung kann das im Kreislauf geführte Kühlwasser bedarfsweise in einem gesonderten Behandlungstank mit einem Reinigungs- und/oder Desinfektionsmittel versetzt und anschließend wieder in den Kreislauf zurückgeführt werden oder aber beispielsweise für die Überwinterung frostsicher in dem entsprechend isolierten Behandlungstank verwahrt werden. Zudem kann in periodischen Abständen mittels des im Kreislauf geführten Kühlwassers auch eine Abreinigung aller Flächen, insbesondere des Verdampfungskühlers durchgeführt werden, wobei das zur Reinigung verwendete Kühlwasser anschließend im Behandlungstank aufgefangen und sodann zum Beispiel in die Kanalisation abgeführt werden kann.

Die im Rahmen der Erfindung vorgesehene Verdampfungskühlanordnung umfasst einen mit Kühlwasser befüllten und ein Reservoir sowie einen Verdampfungskühler umfassenden Kühlkreislauf, der eine Zuleitung zum Einleiten von Nachsatzwasser in den Kreislauf und eine Ablaufleitung zum Ableiten von Absalzwasser aus dem Kreislauf aufweist.

Erfindungsgemäß ist vorgesehen, dass die Zuleitung und die Ablaufleitung mit einem Meßbehälter eines vorbestimmten Volumens kommunizieren und der Meßbehälter mit mindestens einer schaltbaren Anschlussöffnung für die Einleitung von Nachsatzwasser sowie einer schaltbaren Abflussöffnung für im Meßbehälter aufgenommenes Absalzwasser versehen ist und Füllstandssensoren vorgesehen sind, mittels derer vorbestimmbare Füllvolumina sowie der minimale und maximale Füllstand im Meßbehälter ermittelbar und an eine Steuereinrichtung zur Ansteuerung der schaltbaren Anschluss- und Abflussöffnungen übergebbar sind.

In einer Weiterbildung der erfindungsgemäßen Verdampfungskühlanordnung ist vorgesehen, dass das Reservoir des Kühlkreislaufs mit Füllstandssensoren ausgebildet ist, die mit der Steuereinrichtung kommunizieren, um in Abhängigkeit vom gemessenen Füllstand des Reservoirs die Einleitung von Nachsatzwasser aus dem Meßbehälter zu steuern.

Nach einer Ausgestaltung der erfindungsgemäßen Verdampfungsanordnung ist vorgesehen, dass der Meßbehälter mindestens zwei schaltbare Anschlussöffnungen für die Zuführung unterschiedlicher Wasserfraktionen aufweist, die nach Maßgabe eines vorgebbaren Mineraliengehalts in entsprechenden Mischungsanteilen zur Ausbildung einer Charge an Nachsatzwasser im Mischbehälter mischbar sind.

Diese unterschiedlichen Wasserfraktionen können z.B. von Rohwasser unterschiedlicher Resthärte oder auch von enthärtetem Weichwasser gebildet sein.

Darüber hinaus kann vorgesehen sein, dass der Kühlkreislauf eine Sonde zur Ermittlung des Mineraliengehalts,, beispielsweise über eine Ermittlung der elektrischen Leitfähigkeit und/oder der Resthärte des Kühlwassers, einen Temperatursensor und/oder eine physikalische Desinfektionsanordnung umfasst.

Ferner kann die Verdampfungskühlanordnung einen Behandlungstank aufweisen, der vorübergehend mit dem Kühlkreislauf schaltbar verbindbar und mit dem Kühlwasser aus dem Kühlkreislauf befüllbar ist. Der Behandlungstank kann für die Zugabe eines Reinigungs- und/oder Desinfektionsmittels zum aufgenommenen Kühlwasser und/oder für die frostsichere Lagerung des Kühlwassers eingerichtet sein und umfasst ferner eine Pumpleitung zum Rückfördern des Kühlwassers in den Kühlkreislauf und/oder eine Ablauföffnung zum Abführen des Kühlwassers, um dieses zum Beispiel im Anschluss an eine Reinigung des Gesamtsystems der Verdampfungskühlanordnung komplett auszutauschen.

Weitere Ausgestaltungen und Einzelheiten der Erfindung werden nachfolgend anhand eines Ausführungsbeispiels in der Zeichnung erläutert.

Die einzige Figur zeigt in einer stark vereinfachten schematisierten Darstellung eine Verdampfungskühlanordnung 1, die ein Reservoir 10 mit einer Förderpumpe 100 für ein Kühlwasser umfasst, welches über eine Kreislaufleitung 120, 121 mit einem zur Atmosphäre offenen Verdampfungskühler 11 unter Ausbildung eines entsprechenden Kühlkreislaufs verbunden ist. Das im Reservoir 10 vorgehaltene und von der Förderpumpe 100 durch den Kühlkreislauf geförderte Kühlwasser gelangt über eine Vorlaufleitung 120 in den Verdampfungskühler 11 und nimmt auf diesem Wege in nicht dargestellter Weise über einen beispielsweise integrierten Wärmetauscher (nicht dargestellt) Wärme aus einem zu kühlenden Prozess auf.

Im Verdampfungskühler 11 wird das über die Vorlaufleitung 120 zugeführte erwärmte Kühlwasser teilweise verdampft und als Wasserdampf WD an die Umgebung abgegeben. Die nicht verdampfte Restmenge des zugeführten Kühlwassers wird dabei stark abgekühlt und über die Rücklaufleitung 121 wieder in das Reservoir 10 zurückgeleitet. Dabei steigt jedoch die Konzentration der im Kühlwasser gelösten Stoffe an.

Zur Aufrechterhaltung der Menge an Kühlwasser im Reservoir sowie des thermodynamischen Gleichgewichts ist es von daher erforderlich, zum einen das verdampfte Kühlwasser durch eine entsprechende Menge an Nachsatzwasser zu ersetzen und auch in gewissen zeitlichen Abständen eine vorbestimmte Menge an Kühlwasser als Absalzwasser aus dem Kreislauf zu entfernen und durch eine gleich große Menge an frischem Nachsatzwasser zu ersetzen.

Zu diesem Zweck ist ein Meßbehälter 13 vorgesehen, der über mindestens eine Verbindungsleitung 135 mit dem Reservoir 10 kommuniziert.

Zum Betrieb der Verdampfungskühlanordnung 1 wird ein aus mehreren Schritten bestehender Zyklus ausgeführt.

Der Zyklus startet, indem eine vorbestimmte Menge an Absalzwasser aus dem Kreislauf des Kühlwassers entfernt wird. Dazu wird entgegen Pfeil P1 über die Verbindungsleitung 135 und die Öffnung eines entsprechenden Ventils in der Verbindungsleistung eine vorbestimmte Menge an Kühlwasser als Absalzwasser aus dem Reservoir 10 entfernt und in den Meßbehälter 13 eingefüllt.

Für den Betrieb der Verdampfungskühlanordnung kann beispielsweise die Einhaltung einer Eindickungszahl von 2,5 erfahrungsgemäß als in vielen Situationen geeignet angesehen werden.

Das gesamte Innenvolumen des Meßbehälters 13 wird mit 100 % Volumen gleichgesetzt, sodass für einen chargenweisen Betrieb eine vollständige Füllung des Mischbehälters 13 zu 100 % der im Rahmen einer Charge umgesetzten Wassermenge entspricht.

Zugleich summiert sich die Menge des dem Kreislauf zugeführten Nachsatzwassers aus der Menge des bei der Verdunstung ersetzten Nachsatzwassers und aus der Menge des für den Ersatz des entfernten Absalzwassers eingesetzten Nachsatzwassers ebenfalls auf 100 %.

Wendet man nun beispielsweise die Eindickungszahl 2,5 an, so ergibt sich aus der Gleichung Eindickungszahl = Menge an eingesetztem Nachsatzwasser / Menge des Absalzwassers für 100 % Nachsatzwasser eine darauf bezogene Menge an Absalzwasser von 40 %. Dementsprechend entfallen die verbleibenden 60 % des Nachsatzwassers auf den Ersatz des verdampften Kühlwassers.

Insoweit kann im ersten Schritt des Zyklus über die Verbindungsleitung 135 eine solche Menge an Kühlwasser aus dem Reservoir abgezogen werden, dass das auf 100 % gesetzte Volumen des Meßbehälters 13 zu hier 40 % gefüllt wird.

Dazu ist der Meßbehälter 13 mit entsprechenden Messsonden ausgebildet, die unterschiedliche Füllstände detektieren und auf entsprechende prozentuale Anteile des gesamten Vielvolumens eingestellt werden. Ein solcher Meßsensor repräsentiert die Niveaulinie 130, die zugleich die beispielhaft gewünschten 40 % des Innenvolumens des Meßbehälters 13 darstellen. Demgemäß wird über die Verbindungsleitung 135 entgegen Pfeil P1 so viel Kühlwasser aus dem Reservoir in den Meßbehälter 130 eingefüllt, dass sich dieser bis zum Niveau 130 füllt. Sobald der zugeordnete Meßsensor ein Signal abgibt, wird die Verbindungsleitung 135 über das hier nicht dargestellte Ventil geschlossen. Das solchermaßen im Meßbehälter 135 abgemessene Absalzwasser kann sodann über Öffnung eines weiteren Ventils gemäß Pfeil P4 in einen entsprechenden Ablauf 134, zum Beispiel die Kanalisation abgegeben werden.

Nach solchermaßen vollendeter Absalzung wird sodann der vollständig entleerte Meßbehälter 13 in einem nachfolgenden Schritt chargenweise mit Nachsatzwasser vollständig befüllt, welches im dargestellten Ausführungsbeispiel nach Maßgabe eines vorgegebenen Mineraliengehalts aus zwei unterschiedlichen Wasserfraktionen exakt angemischt wird. Dazu wird mindestens eine Wasserfraktion eines Härtebildner enthaltenden Rohwassers, beispielsweise Trinkwasser aus einer entsprechenden Rohwassereinspeisung 15 bis zu einem gewünschten prozentualen Anteil des Gesamtvolumens des Meßbehälters 13, repräsentiert durch eine entsprechende Niveaulinie 131 und einen zugehörigen Füllstandssensor gemäß Pfeil P2 in den Meßbehälter 13 eingefüllt. Anschließend wird der verbleibende Volumenanteil des Meßbehälters 13 gemäß Pfeil P3 mit einer weiteren Wasserfraktion eines enthärteten Weichwassers aus einem entsprechenden Weichwasserbereiter 14 befüllt, bis ein entsprechender Füllstandssensor das Erreichen der maximalen Niveaulinie 132 detektiert, sodass eine 100 %ige Charge an Nachsatzwasser im Meßbehälter 13 vorbereitet und gemischt worden ist, wovon im beschriebenen Beispiel 60 % für den Ersatz des verdampften Kühlwassers und die verbleibenden 40 % exakt derjenigen Menge entsprechen, die zuvor als Absalzwasser aus dem Reservoir 10 entfernt worden ist. Die Bestimmung der bei der Anmischung des Nachsatzwassers eingesetzten prozentualen Anteile von Rohwasser und Weichwasser kann z.B. über den Härtegehalt durch eine einfache Analyse erfolgen. Eine Analyse des Rohwassers liegt häufig bereits durch den Wasserlieferanten vor, der Härtegehalt des Weichwassers ergibt sich üblicherweise aus dem Zustand eines eingesetzten Ionenaustauschers oder sonstigen Weichwasserquellen, wie z.B. Regenwasser oder Kondensat. Eine elektronische Steuerung erfasst in einem Langzeitlogging den Verbrauch der jeweiligen Wasseranteile.

Dementsprechend kann im anschließenden Schritt das im Meßbehälter 13 vorhandene Nachsatzwasser beispielsweise nach Maßgabe einer Niveausteuerung mit entsprechenden Füllstandssensoren im Reservoir 10 über die Verbindungsleitung 135 gemäß Pfeil P1 in den Kreislauf eingeleitet werden, wobei sowohl das zuvor entfernte Absalzwasser als auch das verdampfte Kühlwasser im Kreislauf aufgefüllt werden. Eine solche Niveausteuerung im Reservoir 10 verhindert sowohl einen Überlauf als auch einen Trockenlauf und stellt den regulären Betrieb der Verdampfungskühlanordnung sicher.

Sobald der Meßbehälter 13 auf diese Weise wieder vollständig entleert worden ist, was durch einen entsprechenden, die minimale Niveaulinie 133 detektierenden Füllstandssensor im Meßbehälter 13 ermittelt wird, wird der Zyklus mit dem ersten Schritt, d. h. dem Einfüllen der vorbestimmten Menge an Absalzwasser aus dem Kreislauf erneut gestartet. Diese Abfolge von Zyklen kann nahezu beliebig oft wiederholt werden, bis die Verdampfungskühlanordnung durch ein Abschaltsignal bzw. Abschaltereignis abgeschaltet wird. Der zeitliche Abstand zwischen den einzelnen Absalzungen wird dabei maßgeblich von dem durch die Verdampfung im Verdampfungskühler 11 eintretenden und mit Nachsatzwasser ausgeglichenen Verlust an Kühlwasser bestimmt, wobei der Verdampfungskühler 11 bei entsprechenden Umgebungsbedingungen auch zeitweise adiabatisch betrieben werden kann.

Die von den einzelnen Füllstandssensoren des Meßbehälters 13 ermittelten Füllstände werden in nicht näher dargestellter Weise an eine Steuerungseinrichtung übergeben, die das Öffnen und Schließen entsprechender Ventile und/oder Pumpen nach Maßgabe einer entsprechenden Programmsteuerung bewirkt.

Auf diese vorangehend dargelegte Weise ist es möglich, quasi kontinuierlich und unterbrechungsfrei ein exakt definiertes und aus einem oder mehreren Rohwässern sowie Weichwasser gemischtes Nachsatzwasser bereitzustellen, welches ein Höchstmaß an Verdampfung zulässt, ohne die Sättigungslinie zu überschreiten. Eine Überwachung des Kreislaufwassers beispielsweise mittels Sensoren für die elektrische Leitfähigkeit ist nicht mehr notwendig.

Es versteht sich jedoch, dass zum Zwecke der Anlagenüberwachung Sonden z.B. zur Ermittlung der elektrischen Leitfähigkeit und/oder der Resthärte des Kühlwassers, Temperatursensoren und/oder physikalische Desinfektionsanordnung sowie Filter im Kreislauf in an sich bekannter Weise vorgesehen sein können.

Darüber hinaus kann die Verdampfungskühlanordnung auch einen Behandlungstank aufweisen, der vorübergehend mit dem Kühlkreislauf schaltbar verbindbar ist, um beispielsweise das Kühlwasser aus dem Kühlkreislauf mit einem Reinigungs- und/oder Desinfektionsmittel zu versetzen und anschließend über eine entsprechende Pumpe wieder in den Kreislauf zurückzufördern. Bei entsprechend frostsicherer Ausgestaltung des Behandlungstanks kann das Kühlwasser auch zum Beispiel in diesem frostsicher überwintert werden, bevor es bei erneuter Inbetriebnahme über eine entsprechende Pumpe wieder in den Kreislauf gefördert wird.

Darüber hinaus kann, vorzugsweise in betriebsarmer Zeit, auch eine Spülung der gesamten Verdampfungskühlanordnung mit dem Kühlwasser vorgenommen werden, welches anschließend im Behandlungstank aufgefangen und von dort beispielsweise in die Kanalisation abgelassen werden kann.

Der Meßbehälter 13 kann zum Zwecke der einfachen Sichtprüfung über ein über die ganze Höhe reichendes und mit dem Behälter verbundenes Klarsichtrohr mit einem Magnetschwimmer zwecks Anzeige der Niveaus und beispielsweise mit einer Kontaktträger-Leiste ausgerüstet sein, die eine Skala von 0-100 % der Füllhöhe des Meßbehälters 13 aufweist. An dieser Kontaktträger-Leiste können sodann Magnetschalter zur Fixierung und Erkennung der vorangehend erläuterten Niveaus, ausgedrückt als prozentuale Anteile am Gesamtvolumen des Meßbehälter 13 angebracht werden, die variabel eingestellt werden können.

**Patentansprüche**

1.  Verfahren zum Betreiben einer Verdampfungskühlanordnung (1), bei welchem Kühlwasser in einem Kreislauf geführt wird, wobei der Kreislauf ein Reservoir (10) des Kühlwassers und einen Verdampfungskühler (11) umfasst, in welchem eine Teilmenge des aus dem Kreislauf zugeführten Kühlwassers unter Abkühlung der verbleibenden Restmenge des zugeführten Kühlwassers verdampft und die verbleibende Restmenge in das Reservoir (10) zurückgeleitet wird und wobei die verdampfte Teilmenge des Kühlwassers mit einem ersten in den Kreislauf eingeleiteten Teilstrom eines Nachsatzwassers ersetzt wird und in zeitlichen Abständen eine vorbestimmte Menge an Kühlwasser als Absalzwasser aus dem Kreislauf entfernt und durch eine gleich große Menge eines zweiten Teilstromes an Nachsatzwasser ersetzt wird, **dadurch gekennzeichnet, dass** ein mit dem Kreislauf verbindbarer Meßbehälter (13) eines vorbestimmten Volumens vorgesehen wird und ein Zyklus der nachstehenden Schritte ausgeführt wird, indem

    • in einem ersten Schritt ein Teilvolumen des Meßbehälters (13) mit der vorbestimmten Menge an Absalzwasser aus dem Kreislauf befüllt und das im Meßbehälter (13) befindliche Absalzwasser anschließend abgeführt wird,
    • in einem nachfolgenden Schritt der Meßbehälter (13) chargenweise mit Nachsatzwasser eines vorgegebenen Mineraliengehalts vollständig befüllt wird, wobei der Mineraliengehalt des Nachsatzwassers aus dem Mineraliengehalt des nicht im Verdampfungskühler (11) verdampften Kühlwassers und dem Mineraliengehalt des für den verdampften Anteil zugesetzten Nachsatzwassers durch Mischung im Kreislauf bestimmt wird,
    • in einem anschließenden Schritt das im Meßbehälter (13) vorhandene Nachsatzwasser in den Kreislauf eingeleitet wird, bis der Meßbehälter (13) vollständig entleert ist und anschließend der Zyklus bis zu einem Abschaltereignis beliebig oft wiederholt wird.

2.  Verfahren nach Anspruch 1, **dadurch gekennzeichnet, dass** das Einleiten des Nachsatzwassers in den Kreislauf in Abhängigkeit vom Füllstand des Kühlwassers im Reservoir (10) gesteuert wird.

3.  Verfahren nach einem der Ansprüche 1 oder 2, **dadurch gekennzeichnet, dass** bei der chargenweisen Befüllung des Meßbehälters (13) mit Nachsatzwasser der Meßbehälter (13) mit mindestens zwei unterschiedlichen Wasserfraktionen aufgefüllt wird, die nach Maßgabe des vorgegebenen Mineraliengehalts in entsprechenden Mischungsanteilen in den Meßbehälter (13) eingefüllt und zu einer Charge des Nachsatzwassers vermischt werden.

4.  Verfahren nach Anspruch 3, **dadurch gekennzeichnet, dass** die Wasserfraktionen unterschiedliche Härtegrade aufweisen.

5.  Verfahren nach einem der Ansprüche 1 bis 4, **dadurch gekennzeichnet, dass** der Mineraliengehalt des dem Verdampfungskühler (11) zugeführten Kühlwassers gemessen und mit einem vorgegebenen Sollwert verglichen wird und bei Abweichung des gemessenen Mineraliengehalts vom Sollwert der vorgegebene Mineraliengehalt des Nachsatzwassers und/oder die vorbestimmte Menge an Absalzwasser variiert wird.

6.  Verfahren nach einem der Ansprüche 1 bis 5, **dadurch gekennzeichnet, dass** das im Kreislauf geführte Kühlwasser bedarfsweise in einem Behandlungstank mit einem Reinigungs- und/oder Desinfektionsmittel versetzt oder frostsicher verwahrt und anschließend in den Kreislauf zurückgefördert oder abgeführt wird.

7.  Verdampfungskühlanordnung (1) zur Durchführung des Verfahrens nach einem der vorangehenden Ansprüche, umfassend einen mit Kühlwasser befüllten und ein Reservoir (10) und einen Verdampfungskühler (11) umfassenden Kühlkreislauf, der eine Zuleitung zum Einleiten von Nachsatzwasser in den Kreislauf und eine Ablaufleitung zum Ableiten von Absalzwasser aus dem Kreislauf aufweist, **dadurch gekennzeichnet, dass** die Zuleitung (135) und die Ablaufleitung mit einem Meßbehälter (13) eines vorbestimmten Volumens kommunizieren und der Meßbehälter (13) mit mindestens einer schaltbaren Anschlussöffnung für die Einleitung von Nachsatzwasser sowie einer schaltbaren Abflussöffnung für im Meßbehälter (13) aufgenommenes Absalzwasser versehen ist und Füllstandssensoren vorgesehen sind, mittels derer vorbestimmbare Füllvolumina (130, 131) sowie der minimale und maximale Füllstand (133, 132) im Meßbehälter (13) ermittelbar und an eine Steuereinrichtung zur Ansteuerung der schaltbaren Anschluss- und Abflussöffnungen übergebbar sind.

8.  Verdampfungskühlanordnung (1) nach Anspruch 7, **dadurch gekennzeichnet, dass** das Reservoir (10) des Kühlkreislaufs mit Füllstandssensoren ausgebildet ist, die mit der Steuereinrichtung kommunizieren, um in Abhängigkeit vom gemessenen Füllstand des Reservoirs (10) die Einleitung von Nachsatzwasser aus dem Meßbehälter (13) zu steuern.

9.  Verdampfungskühlanordnung (1) nach einem der Ansprüche 7 oder 8, **dadurch gekennzeichnet, dass** der Meßbehälter (13) mindestens zwei schaltbare Anschlussöffnungen für die Zuführung unterschiedlicher Wasserfraktionen aufweist, die nach Maßgabe eines vorgebbaren Mineraliengehalts in entsprechenden Mischungsanteilen zur Ausbildung einer Charge an Nachsatzwasser im Mischbehälter (13) mischbar sind.

10.  Verdampfungskühlanordnung (1) nach Anspruch 9, **dadurch gekennzeichnet, dass** die Wasserfraktionen unterschiedliche Härtegrade aufweisen.

11.  Verdampfungskühlanordnung (1) nach einem der Ansprüche 7 bis 10, **dadurch gekennzeichnet, dass** der Kühlkreislauf eine Sonde zur Ermittlung des Mineraliengehalts, der elektrischen Leitfähigkeit und/oder der Resthärte des Kühlwassers, einen Temperatursensor und/oder eine physikalische Desinfektionsanordnung umfasst.

12.  Verdampfungskühlanordnung (1) nach einem der Ansprüche 7 bis 11, **dadurch gekennzeichnet, dass** ein Behandlungstank vorgesehen ist, der mit dem Kühlkreislauf schaltbar verbindbar und mit dem Kühlwasser aus dem Kühlkreislauf befüllbar ist und für die Zugabe eines Reinigungs- und/oder Desinfektionsmittels oder für die frostsichere Lagerung des Kühlwassers eingerichtet ist und eine Pumpleitung zum Rückfördern des Kühlwassers in den Kühlkreislauf und/oder eine Ablauföffnung (134) zum Abführen des Kühlwassers aufweist.

## Claims

1.  A method of operating an evaporative cooling system (1), in which cooling water is circulated in a circuit, the circuit comprising a reservoir (10) for the cooling water and an evaporative cooler (11), in which a portion of the cooling water supplied from the circuit evaporates whilst cooling the remaining quantity of the supplied cooling water, and the remaining quantity is returned to the reservoir (10), and wherein the evaporated portion of the cooling water is replaced by a first partial flow of make-up water introduced into the circuit, and at intervals a predetermined quantity of cooling water is removed from the circuit as blowdown water and replaced by an equal quantity of a second partial flow of make-up water, **characterised in that** a measuring vessel (13) of a predetermined volume, connectable to the circuit, is provided and a cycle comprising the following steps is carried out, wherein

    • in a first step, a partial volume of the measuring vessel (13) is filled with the predetermined quantity of blowdown water from the circuit and the blowdown water located in the measuring vessel (13) is subsequently drained,
    • in a subsequent step, the measuring vessel (13) is completely filled in batches with make-up water of a specified mineral content, wherein the mineral content of the make-up water is determined by mixing within the circuit from the mineral content of the cooling water not evaporated in the evaporative cooler (11) and the mineral content of the make-up water added to compensate for the evaporated portion, by mixing within the circuit,
    • in a subsequent step, the make-up water present in the measuring vessel (13) is fed into the circuit until the measuring vessel (13) is completely emptied, and the cycle is then repeated as often as required until a shutdown event occurs.

2.  The method according to claim 1, **characterised in that** the introduction of the make-up water into the circuit is controlled as a function of the level of the cooling water in the reservoir (10).

3.  A method according to one of claims 1 or 2, **characterised in that**, when the measuring vessel (13) is filled in batches with make-up water, the measuring vessel (13) is filled with at least two different water fractions, which are introduced into the measuring vessel (13) in appropriate mixing ratios in accordance with the specified mineral content and are mixed to form a batch of make-up water.

4. A method according to claim 3, **characterised in that** the water fractions have different degrees of hardness.

5. A method according to any one of claims 1 to 4, **characterised in that** the mineral content of the cooling water supplied to the evaporative cooler (11) is measured and compared with a predetermined setpoint, and if the measured mineral content deviates from the setpoint, the predetermined mineral content of the make-up water and/or the predetermined quantity of blowdown water is varied.

6. A method according to any one of claims 1 to 5, **characterised in that** the cooling water circulating in the circuit is, as required, mixed with a cleaning agent and/or disinfectant in a treatment tank or stored in a frost-proof manner and subsequently returned to the circuit or discharged.

7. Evaporative cooling arrangement (1) for carrying out the method according to one of the preceding claims, comprising a cooling circuit filled with cooling water and comprising a reservoir (10) and an evaporative cooler (11), which has a supply line for introducing make-up water into the circuit and a discharge line for discharging blowdown water from the circuit, **characterised in that** the inlet pipe (135) and the outlet pipe communicate with a measuring vessel (13) of a predetermined volume, and the measuring vessel (13) is provided with at least one switchable connection opening for the introduction of make-up water and a switchable outlet opening for blowdown water contained in the measuring vessel (13), and level sensors are provided by means of which predeterminable filling volumes (130, 131) as well as the minimum and maximum liquid levels (133, 132) in the measuring vessel (13) can be determined and transmitted to a control device for controlling the switchable inlet and outlet openings.

8. Evaporative cooling arrangement (1) according to claim 7, **characterised in that** the reservoir (10) of the cooling circuit is equipped with level sensors which communicate with the control device in order to control the introduction of make-up water from the measuring vessel (13) depending on the measured level of the reservoir (10).

9. Evaporative cooling arrangement (1) according to one of claims 7 or 8, **characterised in that** the measuring vessel (13) has at least two switchable connection openings for the supply of different water fractions, which can be mixed in corresponding proportions in the mixing vessel (13) to form a batch of make-up water in accordance with a preset mineral content.

10. Evaporative cooling arrangement (1) according to claim 9, **characterised in that** the water fractions have different degrees of hardness.

11. Evaporative cooling arrangement (1) according to any one of claims 7 to 10, **characterised in that** the cooling circuit comprises a probe for determining the mineral content, the electrical conductivity and/or the residual hardness of the cooling water, a temperature sensor and/or a physical disinfection arrangement.

12. Evaporative cooling system (1) according to any one of claims 7 to 11, **characterised in that** a treatment tank is provided which can be connected to the cooling circuit and filled with the cooling water from the cooling circuit, and which is equipped for the addition of a cleaning agent and/or disinfectant or for the frost-proof storage of the cooling water, and comprises a pump line for returning the cooling water to the cooling circuit and/or a drain opening (134) for draining the cooling water.

**Revendications**

1. Procédé de fonctionnement d'un ensemble de refroidissement par évaporation (1), pour lequel de l'eau de refroidissement est guidée dans un circuit, dans lequel le circuit comprend un réservoir (10) d'eau de refroidissement et un refroidisseur par évaporation (11), dans lequel une quantité partielle de l'eau de refroidissement fournie par le circuit est évaporée en refroidissant la quantité résiduelle restante de l'eau de refroidissement acheminée et la quantité résiduelle restante est renvoyée dans le réservoir (10) et dans lequel la quantité partielle évaporée de l'eau de refroidissement est remplacée par un premier flux partiel d'une eau de complément introduit dans le circuit et une quantité prédéterminée d'eau de refroidissement est éliminée à certains intervalles temporels comme eau de purge à partir du circuit et est remplacée par une quantité de même grandeur d'un second flux partiel d'eau de complément, **caractérisé en ce qu'**un récipient de mesure (13) pouvant être relié au circuit d'un volume prédéterminé est prévu et un cycle des étapes suivantes est exécuté **en ce que**

   - dans une première étape, un volume partiel du récipient de mesure (13) est rempli avec la quantité prédéterminée d'eau de purge provenant du circuit et l'eau de purge se trouvant dans le récipient de mesure (13) est ensuite évacuée,

- dans une étape suivante, le récipient de mesure (13) est complètement rempli de manière discontinue avec de l'eau de complément d'une teneur en minéraux prédéfinie, dans lequel la teneur en minéraux de l'eau de complément est déterminée à partir de la teneur en minéraux de l'eau de refroidissement non évaporée dans le refroidisseur par évaporation (11) et de la teneur en minéraux de l'eau de complément ajoutée pour la part évaporée par mélange dans le circuit,

- dans une étape suivante, l'eau de complément présente dans le récipient de mesure (13) est introduite dans le circuit jusqu'à ce que le récipient de mesure (13) soit complètement vidé et le cycle est ensuite répété aussi souvent que nécessaire jusqu'à un événement d'arrêt.

2. Procédé selon la revendication 1, **caractérisé en ce que** l'introduction d'eau de complément dans le circuit est commandée en fonction du niveau de remplissage de l'eau de refroidissement dans le réservoir (10).

3. Procédé selon l'une quelconque des revendications 1 ou 2, **caractérisé en ce que** lors du remplissage discontinu du récipient de mesure (13) avec de l'eau de complément, le récipient de mesure (13) est rempli avec au moins deux fractions d'eau différentes qui sont versées selon la teneur en minéraux prédéfinie en parts de mélange correspondantes dans le récipient de mesure (13) et sont mélangées en une charge d'eau de complément.

4. Procédé selon la revendication 3, **caractérisé en ce que** les fractions d'eau présentent différents degrés de dureté.

5. Procédé selon l'une quelconque des revendications 1 à 4, **caractérisé en ce que** la teneur en minéraux de l'eau de refroidissement fournie au refroidisseur par évaporation (11) est mesurée et comparée à une valeur de consigne prédéfinie et en cas d'écart de la teneur en minéraux mesurée par rapport à la valeur de consigne, la teneur en minéraux prédéfinie de l'eau de complément et/ou la quantité prédéterminée d'eau de purge est variée.

6. Procédé selon l'une quelconque des revendications 1 à 5, **caractérisé en ce que** l'eau de refroidissement fournie dans le circuit est déplacée si besoin dans un réservoir de traitement avec un agent de nettoyage et/ou de désinfection ou conservée hors gel et ensuite ramenée dans le circuit ou évacuée.

7. Ensemble de refroidissement par évaporation (1) pour la réalisation du procédé selon l'une quelconque des revendications précédentes, comprenant un circuit de refroidissement rempli d'eau de refroidissement et comprenant un réservoir (10) et un refroidisseur par évaporation (11), circuit qui présente une conduite d'amenée d'introduction d'eau de complément dans le circuit et une conduite d'évacuation de dérivation d'eau de purge du circuit, **caractérisé en ce que** la conduite d'amenée (135) et la conduite d'évacuation communiquent avec un récipient de mesure (13) d'un volume prédéterminé et le récipient de mesure (13) est pourvu d'au moins une ouverture de raccordement commutable pour l'introduction d'eau de complément ainsi que d'une ouverture de vidange commutable pour de l'eau de purge reçue dans le récipient de mesure (13) et des capteurs de niveau de remplissage sont prévus, au moyen desquels des volumes de remplissage (130, 131) pouvant être prédéterminés ainsi que le niveau de remplissage (133, 132) minimal et maximal peuvent être calculés dans le récipient de mesure (13) et transmis à un dispositif de commande pour la commande des ouvertures de raccordement et de vidange commutables.

8. Ensemble de refroidissement par évaporation (1) selon la revendication 7, **caractérisé en ce que** le réservoir (10) du circuit de refroidissement est formé avec des capteurs de niveau de remplissage qui communiquent avec le dispositif de commande afin de commander l'introduction d'eau de complément du récipient de mesure (13) en fonction du niveau de remplissage mesuré du réservoir (10).

9. Ensemble de refroidissement par évaporation (1) selon l'une quelconque des revendications 7 ou 8, **caractérisé en ce que** le récipient de mesure (13) présente au moins deux ouvertures de raccordement commutables pour l'amenée de différentes fractions d'eau qui sont mélangeables selon une teneur en minéraux prédéfinissable dans des parts de mélange correspondantes de formation d'une charge en eau de complément dans le récipient de mélange (13).

10. Ensemble de refroidissement par évaporation (1) selon la revendication 9, **caractérisé en ce que** les fractions d'eau présentent des degrés de dureté différents.

11. Ensemble de refroidissement par évaporation (1) selon l'une quelconque des revendications 7 à 10, **caractérisé en ce que** le circuit de refroidissement comprend une sonde de détermination de la teneur en minéraux, de la conductibilité électrique et/ou de la dureté résiduelle de l'eau de refroidissement, un capteur de température et/ou un ensemble de désinfection physique.

12. Ensemble de refroidissement par évaporation (1) selon l'une quelconque des revendications 7 à 11, **caractérisé en ce qu'**un réservoir de traitement est prévu, lequel peut être relié de manière commutable au circuit de refroidissement et rempli avec l'eau de refroidissement provenant du circuit de refroidissement et est conçu pour l'ajout d'un agent de nettoyage et/ou de désinfection ou pour le stockage hors gel de l'eau de refroidissement et présente une conduite de pompage pour le refoulement de l'eau de refroidissement dans le circuit de refroidissement et/ou une ouverture d'évacuation (134) pour l'évacuation de l'eau de refroidissement.

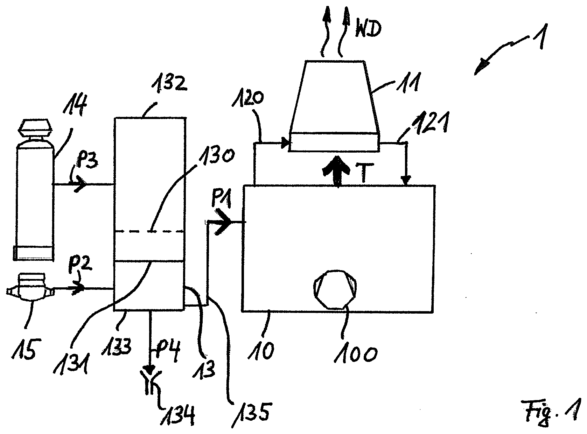

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10122230 A1